# EUROPEAN PATENT SPECIFICATION

(11) **EP 2 320 328 B1**
(45) Date of publication and mention of the grant of the patent: **19.12.2012**
(21) Application number: 09797376.2
(22) Date of filing: 25.05.2009
(51) Int. Cl.: G06F 13/40, G06K 7/00, G06F 13/10

(54) **OPERATION MODE SWITCHING OF DATA CARD AND ITS CONTROL METHOD, DEVICE AND DATA CARD**
BETRIEBSMODUSWECHSEL EINER DATENKARTE UND STEUERVERFAHREN, VORRICHTUNG UND DATENKARTE
COMMUTATION DE MODE D'OPÉRATION DE CARTE DE DONNÉES ET SON DISPOSITIF DE COMMANDE, DISPOSITIF ET CARTE DE DONNÉES

(30) Priority: 15.07.2008 CN 200810132511
(43) Date of publication of application: 11.05.2011
(73) Proprietor: Huawei Device Co., Ltd., Shenzhen, Guangdong 518129 (CN)
(72) Inventor: HUANG, Hai, Guangdong 518129 (CN); FANG, Xiaozhi, Guangdong 518129 (CN)
(74) Representative: Pfenning, Meinig & Partner GbR
(86) International application number: PCT/CN2009/071957
(87) International publication number: WO 2010/006529

(56) References cited:
- CN-A- 101 324 876
- US-A- 5 473 676
- US-A- 5 559 965
- US-B1- 6 292 848

## Description

### FIELD OF THE TECHNOLOGY

The present invention relates to the communications technology, and more particularly to operation mode switching of a data card, a control method and device of the same, and a data card.

### BACKGROUND OF THE INVENTION

With the development of wireless network technology, telecom operators have introduced corresponding mobile access schemes, and data cards play an important role in the implementation of the mobile access schemes. Data cards are usually used together with a notebook computer, and are classified, according to the interface type, into universal serial bus (USB) interface data card, compact flash (CF), and so on.

The operation mode of the data card includes a plug and play (PnP) mode and a non-PnP mode. In PnP mode, after being powered on, the data card maps the ports of itself into multiple virtual serial ports, and the virtual serial ports have different functions. Among multiple pieces of port information reported to an operating system by the data card, one piece of port information represents a compact disk port, and the operating system may consider the data card inserted through the port as a compact disk. Automatic installation and running of background are achieved after running an autorun process in the compact disk device. In non-PnP mode, after being powered on, the data card maps the ports into multiple virtual serial ports, and at this time, among the multiple pieces of port information reported by the data card, no port of compact disk type exists.

During the process of implementing the present invention, the inventor found the following problems.

When using a data card that supports both the PnP mode and the non-PnP mode, due to the influence of other compact disk software, after the data card is powered on, the autorun function in the PnP mode always fails to implement the automatic running or installing operation. According to the prior art, after being powered on, the data card can work merely in a preset operation mode, that is, either in PnP mode or in non-PnP mode. Therefore, if the data card cannot work normally in PnP mode, the data card cannot be switched onto other ports to use the functions in non-PnP mode, thus resulting in the problem that the data card is unavailable. Furthermore, in some cases, the virtual compact disk port of the data card is usually incompatible with the compact disk port supported by the operating system, thus also resulting in the problem that the data card is unavailable.

A U.S. patent No.6,292,848 discloses an adapter card which is capable of being configured in both a legacy configuration and a plug and play configuration, and which can be reconfigured using a utilities program. The configuration is set to a default condition prior to installation which places the adapter card in a legacy configuration. When the adapter card detects the presence of a normal plug and play sequence on the system bus, logic circuitry on the card then switches to a plug and play configuration permitting configuration parameters to be set from the plug and play routines executed as part of the BIOS routine or from the operating system.

### SUMMARY OF THE INVENTION

The embodiments of the present invention provide a method for switching between a PnP operation mode and a non-PnP operation mode of a data card and a method for controlling the switching of an operation mode of a data card, so as to facilitate the use of a data card by a user.

The method for controlling the switching between a PnP operation mode and a non-PnP operation mode of a data card in an embodiment of the present invention employs the following technical solution:

A method for controlling the switching between a PnP operation mode and a non-PnP operation mode of a data card is provided. The method includes the following steps:

Port information of a mapped port of a data card is acquired. The mapped ports can be ports mapped into multiple virtual serial ports. In the PnP operation mode, there is a port mapped to a compact disk port, and in the non-PnP operation mode, there is no port mapped to a compact disk port.

It is detected whether an operation mode switching request exists.

According to the operation mode switching request, an operation mode switching command is sent by using the mapped port, in which the operation mode switching command is configured to instruct the data card to switch the operation mode.

The method for switching between a PnP operation mode and a non-PnP operation mode of a data card in an embodiment of the present invention further employs the following technical solution:

A method for switching between a PnP operation mode and a non-PnP operation mode of a data card is provided. The method includes the following steps:

An operation mode switching command is received. The operation mode switching command is used to instruct the data card to switch the operation mode. In the PnP operation mode, there is a port of the data card being mapped to a compact disk port, and in the non-PnP operation mode, there is no port of the data card being mapped to a compact disk port.

The operation mode switching command is parsed.

According to a parsing result of the operation mode switching command, a product identification (PID) mode of the data card is changed to a mode corresponding to the operation mode switching command.

An embodiment of present invention provides a device for controlling the switching between a PnP operation mode and a non-PnP operation mode of a data card, so as to facilitate the use of a data card by a user.

The device for controlling the switching between a PnP operation mode and a non-PnP operation mode of a data card in an embodiment of the present invention employs the following technical solution.

A device for controlling the switching between a PnP operation mode and a non-PnP operation mode of a data card is provided. The device includes an information acquiring unit, a detecting unit, and a command sending unit.

The information acquiring unit is configured to acquire port information of mapped ports of a data card. The mapped ports being ports mapped into multiple virtual serial ports, and wherein, in the PnP operation mode, there is a port mapped to a compact disk port, and in the non-PnP operation mode, there is no port mapped to a compact disk port.

The detecting unit is configured to detect whether an operation mode switching request exists.

The command sending unit is configured to send an operation mode switching command by using the mapped port according to the operation mode switching request when the detecting unit detects the operation mode switching request, in which the operation mode switching command is used to instruct the data card to switch the operation mode.

An embodiment of the present invention further provides a data card, so as to facilitate operation mode switching.

The data card in an embodiment of the present invention employs the following technical solution.

A data card is provided. The data card includes a command receiving unit, a command parsing unit, and a switching unit.

The command receiving unit is configured to receive an operation mode switching command. The operation mode switching command is used to instruct the data card to switch the operation mode, and wherein, in the PnP operation mode, there is a port of the data card being mapped to a compact disk port, and in the non-PnP operation mode, there is no port of the data card being mapped to a compact disk port.

The command parsing unit is configured to parse the operation mode switching command.

The switching unit is configured to change a PID mode of the data card to a mode corresponding to the operation mode switching command according to a parsing result of the operation mode switching command.

According to the method, device, and data card of the present invention, firstly, port information of mapped ports in a data card is acquired by an operating system, next, an operation mode switching command is delivered by using a mapped port, and then, the data card performs corresponding operation mode switching according to the operation mode switching command. By using the present invention, the disadvantage that the data card cannot be switched to other operation modes when the data card fails to work normally in some operation mode after being powered on in the prior art. Therefore, the present invention may be employed to facilitate the use of the data card by a user.

### BRIEF DESCRIPTION OF THE DRAWINGS

FIG. 1 is a flow chart of a method for controlling the switching of an operation mode of a data card according to an embodiment of the present invention;
FIG. 2 is a schematic diagram of a method for controlling the switching of an operation mode of a data card according to an embodiment of the present invention;
FIG. 3 is a flow chart of a method for controlling the switching of an operation mode of a data card according to an embodiment of the present invention;
FIG. 4 is a structural view of a device for controlling the switching of an operation mode of a data card according to an embodiment of the present invention;
FIG. 5 is a schematic diagram of a device for controlling the switching of an operation mode of a data card according to an embodiment of the present invention;
FIG. 6 is a structural view of a data card according to an embodiment of the present invention; and
FIG. 7 is a schematic diagram of a data card according to an embodiment of the present invention.

### DETAILED DESCRIPTION OF THE EMBODIMENTS

To make the technical solution, objectives and merits of the present invention clearer, the present invention is hereinafter described in detail with reference to the accompanying drawings and exemplary embodiments.

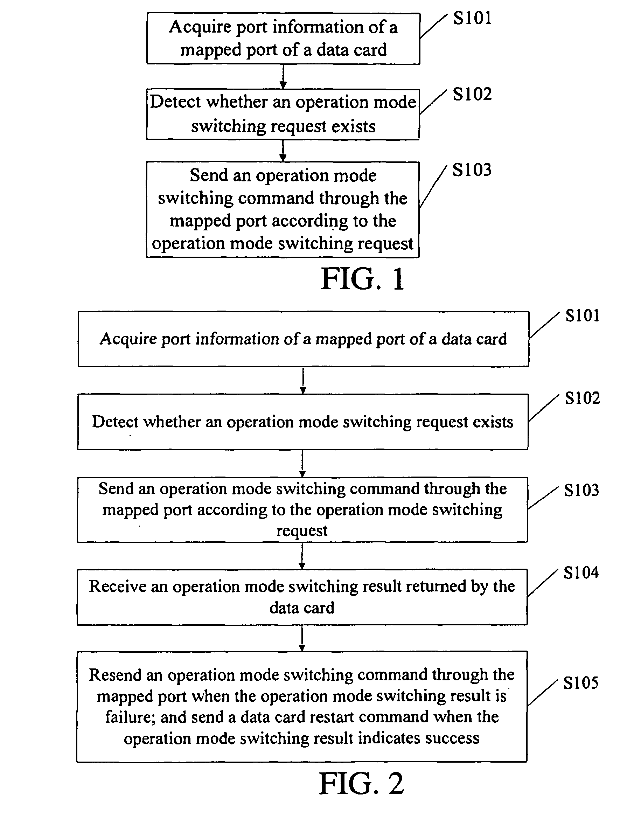

To solve the problem that a data card cannot be switched to other operation modes when the current operation mode cannot be used after the data card is powered on in the prior art, a method for controlling the switching of an operation mode of a data card is provided. As shown in FIG. 1, according to an embodiment of the present invention, the method for controlling the switching of an operation mode of a data card includes the following steps:

S101: Before switching an operation mode, acquire port information of a mapped port of a data card.

The port information is a name and a route of a port mapped by the data card. After determining the mapped port of the data card, an operating system sends an operation mode switching command for the data card by using the port.

S102: Detect whether an operation mode switching request exists.

The operation mode switching request may be a request for operation mode switching of a data card sent to the operating system by a user of the data card according to requirements of the application environment. Furthermore, the operation mode switching request may be a mode switching request actively generated by the operating system when detecting that the data card is unavailable in the current operation mode.

S103: After it is detected that the operation mode switching request exists, send an operation mode switching command by using the mapped port according to the operation mode switching request. The operation mode switching command is used to instruct the data card to switch the operation mode. After receiving the operation mode switching command, the data card performs corresponding operation mode switching according to the command.

In the prior art, after being powered on, the data card can merely work in a preset operation mode, and when the preset operation mode cannot be used and the data card cannot be switched to other operation modes, the data card becomes unavailable. According to the method of the present invention, when the current operation mode of the data card cannot be used, an operation mode switching command is sent to the data card according to an operation mode switching request, so as to control the data card to complete the operation mode switching. Therefore, the method of the present invention facilitates the use of the data card by the user.

After the data card completes the operation mode switching, as shown in FIG. 2, to further ensure the accuracy of the operation mode switching, on the basis of FIG. 1, the method according to an embodiment of the present invention further includes the following steps:

S104: Receive an operation mode switching result returned by the data card.

S105: When the operation mode switching result indicates failure, resend an operation mode switching command by using the mapped port; and when the operation mode switching result indicates success, send a data card restarting command.

In this step, to improve the efficacy of the operation mode switching, when the number of times the received operation mode switching result returned by the data card is failure exceeds a preset value, the operation mode switching ends. The preset value may be set according to requirements, and is generally set to 3.

In this embodiment, the operation mode switching command includes an operation mode switching command for switching from a PnP operation mode to a non-PnP mode and an operation mode switching command for switching from a non-PnP operation mode to a PnP mode. The specific form of the operation mode switching command is not limited to the embodiments of the present invention. In the practical application, any command that is supported by both the operating system and the data card can be adopted to transfer the operation mode switching information.

For example, AT^U2DIAG, an AT command may be used. The AT command includes a command header, a data byte, and other parts. The meaning of the data byte in the AT command is pre-defined, and used to instruct the data card to perform the corresponding operation mode switching. For example, if an AT command AT^U2DIAG=0 is sent, it instructs the data card to switch from the current PnP operation mode to a non-PnP Diag mode (in this mode, the compact disk port in the PnP mode is mapped and replaced by a DIAG port for debugging); and if an AT command AT^U2DIAG=1 is sent, it instructs the data card to switch from the current non-PnP operation mode to a PnP mode. Definitely, the meaning of the data byte "0" or "1" in the AT command is merely an example herein for illustration.

Definitely, if the data card can still work in other types of operation modes, the operation mode switching command may be changed according to the switching modes, so as to realize the switching of the data card in different operation modes.

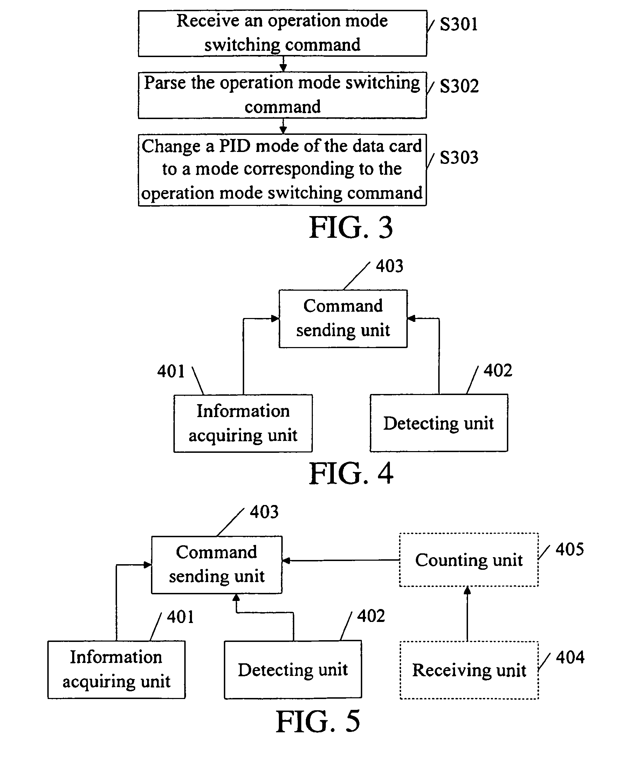

As shown in FIG. 3, according to an embodiment of the present invention, the method of switching an operation mode of a data card includes the following steps.

S301: The data card receives an operation mode switching command, in which the operation mode switching command is used to instruct the data card to perform corresponding operation mode switching.

S302: The data card parses the operation mode switching command.

S303: According to a parsing result of the operation mode switching command, change a product identification (PID) mode of the data card to a mode corresponding to the operation mode switching command.

For example, if the operation mode switching command is used to switch from a PnP operation mode to a non-PnP mode, the data card changes the PID mode of the data card to a PID mode corresponding to the non-PnP mode; and if the operation mode switching command is used to switch from a non-PnP operation mode to a PnP mode, the data card changes the PID mode of the data card to a PID mode corresponding to the PnP mode.

To ensure the accuracy of the operation mode switching, when switching the operation mode according to the operation mode switching command, the data card first determines whether the received command is an operation mode switching command. For example, when the operating system sends operation mode switching information in the form of an AT command, the data card parses the received command header and check whether the command header of the received command indicates that the command is an operation mode switching command. If the command header indicates that the command is an operation mode switching command, corresponding operation mode switching is performed according to the information carried in the data byte in the AT command; if the command header indicates that the command is not an operation mode switching command, the operation mode switching may not be performed.

Next, the operation mode switching command is parsed. If the data byte of the AT command is parsed to be "0", it indicates that the operating system instructs the data card to switch from the PnP operation mode to the non-PnP mode, and the data card changes the PID mode to a mode corresponding to the non-PnP mode according to the AT command; and if the data byte of the AT command is parsed to be "1", it indicates that the operating system instructs the data card to switch from the non-PnP operation mode to the PnP mode, and the data card changes the PID mode to a mode corresponding to the PnP mode according to the AT command.

After completing the corresponding operation mode switching, the data card sends an operation mode switching result to the operating system, and the operating system performs the corresponding operation.

When the operation mode switching succeeds, the operating system sends a data card restarting command to the data card, so as to complete the final operation mode switching process. After being restarted according to the restarting command, the data card first reads the operation mode, and then according to the read operation mode, the data card sets the current operation mode to be a corresponding operation mode. If the operation mode is the PnP mode, the current operation mode is the PnP mode; and if the operation mode is the non-PnP mode, the current operation mode is the non-PnP mode. Finally, the data card sends the port information mapped in the current operation mode after switching to the operating system.

Alternatively, the operation mode switching of the data card may be completed by reconfiguring USB. For example, after receiving the operation mode switching result sent by the data card, a USB bus changes a node state corresponding to the data card to a state corresponding to an operation mode after switching.

It can be seen from the preceding two embodiments that, after being powered on, the data card is enabled to perform corresponding operation mode switching, thereby facilitating the use of the data card by the user.

Through the preceding description of the embodiments, it is apparent to persons skilled in the art that the present invention may be accomplished through software plus a necessary universal hardware platform or through hardware. Based on this, the technical solutions of the present invention may be embodied in the form of a software product, and the software product may be stored in a storage medium and contain several instructions to instruct computer equipment to perform the method described in the embodiments of the present invention.

Furthermore, in an embodiment of the present invention, a device for controlling the switching of an operation mode of a data card is provided.

As shown in FIG. 4, the device for controlling the switching of an operation mode of a data card includes an information acquiring unit 401, a detecting unit 402, and a command sending unit 403. The information acquiring unit 401 is configured to acquire port information of a mapped port of a data card. The detecting unit 402 is configured to detect whether an operation mode switching request exists. The command sending unit 403 is configured to send an operation mode switching command by using the mapped port according to the operation mode switching request if it is detected that the operation mode switching request exists in which the operation mode switching command is used to instruct the data card to switch the operation mode.

By using a mapped port of the data card, an operation mode switching command is sent to the data card, so as to control the data card to switch an operation mode. After the data card completes the operation mode switching, to ensure the accuracy of the operation mode switching, the device of the present invention further includes a receiving unit 404, configured to receive an operation mode switching result returned by the data card. The command sending unit 403 is further configured to resend an operation mode switching command by using the mapped port when the operation mode switching result received by the receiving unit 404 is failure, and send a data card restarting command when the operation mode switching result indicates success.

As shown in FIG. 5, to further improve the efficacy of the operation mode switching, the device further includes a counting unit 405, configured to count the number of times the operation mode switching result returned by the data card and received by the receiving unit 404 is failure. At this time, the command sending unit 403 is configured to send an operation mode switching command by using the mapped port according to the operation mode switching request if it is detected that the operation mode switching request exists, and resend an operation mode switching command by using the mapped port when the operation mode switching result indicates failure and the count value of the counting unit 405 does not exceed a preset value. When the count value of the counting unit 405 exceeds a preset value, the mode switching ends. Similar to the description in the first embodiment, the preset value may be set according to requirements, and is generally set to 3.

Similarly, in view of the description in the previous embodiments, the specific form of the operation mode switching command is not limited to the embodiments of the present invention. In the practical application, any command that is supported by both the operating system and the data card can be adopted to transfer the operation mode switching information. For example, AT^U2DIAG, an AT command may be used. The AT command includes a command header, a data byte, and other parts. The meaning of the data byte in the AT command is pre-defined, and used to instruct the data card to perform the corresponding operation mode switching. For example, if an AT command AT^U2DIAG=0 is sent, it instructs the data card to switch from the current PnP operation mode to a non-PnP Diag mode (in this mode, the compact disk port in the PnP mode is mapped and replaced by a DIAG port for debugging); and if an AT command AT^U2DIAG=1 is sent, it instructs the data card to switch from the current non-PnP operation mode to the PnP mode.

In the preceding embodiment, the device for controlling the switching of an operation mode of a data card may be provided as an individual module to a user for use or may be integrated into a background of a data card for use. If the device for operation mode switching is integrated into a background, the background needs to provide the user with a corresponding operation mode switching activating entry interface. The user may select the operation mode switching and type of the operation mode switching through the interface.

In an embodiment of the present invention, a data card is further provided.

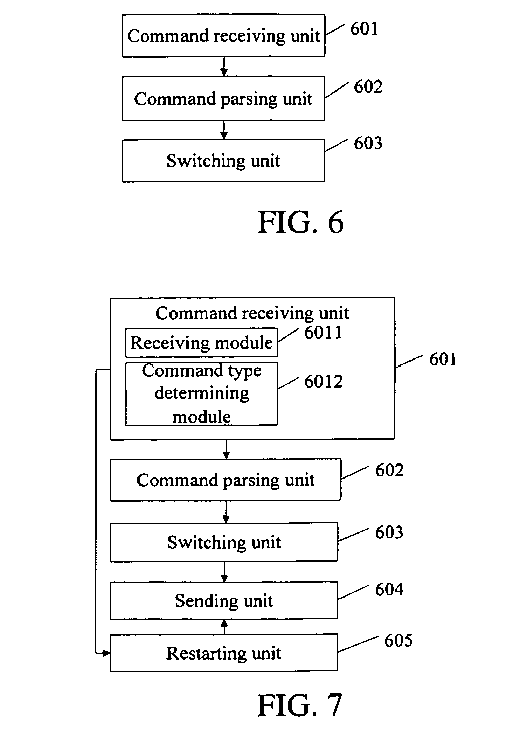

As shown in FIG. 6, the data card of the present invention includes a command receiving unit 601, a command parsing unit 602, and a switching unit 603. The command receiving unit 601 is configured to receive an operation mode switching command. The command parsing unit 602 is configured to parse the operation mode switching command. The switching unit 603 is configured to change a PID mode of the data card to a mode corresponding to the operation mode switching command according to a parsing result of the operation mode switching command.

Specifically, the switching unit 603 changes the PID mode of the data card to a PID mode corresponding to a non-PnP mode when the operation mode switching command is used to switch from a PnP operation mode to the non-PnP mode; and changes the PID mode of the data card to a PID mode corresponding to the PnP mode when the operation mode switching command is used to switch from the non-PnP mode to the PnP mode.

In an embodiment of the present invention, as shown in FIG. 7, the command receiving unit 601 includes a receiving module 6011, configured to receive a command; and a command type determining module 6012, configured to determine whether the command received by the receiving unit is an operation mode switching command. When the command is an operation mode switching command, the command parsing unit 602 determines the type of the operation mode switching command, for example, an operation mode switching command for switching from the non-PnP operation mode to the PnP mode or an operation mode switching command for switching from the PnP operation mode to the non-PnP mode.

When the data card switches the operation mode according to the operation mode switching command, the command type determining module 6012 first determines whether the received command is an operation mode switching command. For example, when the operating system sends the operation mode switching information in the form of an AT command, the command type determining module 6012 determines whether the command is an operation mode switching command according to a command header of the received command, and if yes, the command parsing unit 602 parses the operation mode switching command, so as to determine the type of the operation mode switching command.

Then, if the data byte of the AT command is parsed to be "0", it indicates that the operating system instructs the data card to switch from the PnP operation mode to the non-PnP mode, and the switching unit 603 in the data card changes the PID mode to a mode corresponding to the non-PnP mode according to the AT command; and if the data byte of the AT command is parsed to be "1", it indicates that the operating system instructs the data card to switch from the non-PnP operation mode to the PnP mode, and the switching unit 603 in the data card changes the PID mode to a mode corresponding to the PnP mode according to the AT command.

To facilitate the detection by the operating system whether the operation mode switching is completed, in an embodiment of the present invention, the data card further includes a sending unit 604, configured to send an operation mode switching result to the operating system after the data card completes the corresponding operation mode switching, and then the operating system performs a corresponding operation.

In addition, the command receiving unit 601 is also configured to receive a data card restarting command sent by a sender of the operation mode switching command when the operation mode switching result indicates success. The data card further includes a restarting unit 605, configured to restart the data card according to the data card restarting command. At this time, the sending unit 604 is also configured to send the port information of the mapped port after the operation mode switching to the sender of the operation mode switching command.

It can be seen from the description of the preceding embodiments that, according to the method and device for switching an operation mode and the data card of the present invention, the operating system first acquires port information of mapped ports in the data card, an operation mode switching command is delivered by using a mapped port, and the data card performs corresponding operation mode switching according to the operation mode switching command. By using the present invention, the disadvantage that the data card cannot be switched to other operation modes when the data card fails to work normally in some operation mode after being powered on in the prior art. Therefore, the present invention may be employed to facilitate the use of the data card by a user.

## Claims

1. A method for controlling the switching between a PnP operation mode and a non-PnP operation mode of a data card, comprising:
acquiring port information of mapped ports of a data card (S101), wherein the mapped ports are ports mapped into multiple virtual serial ports, and wherein, in the PnP operation mode, there is a port mapped to a compact disk port, and in the non-PnP operation mode, there is no port mapped to a compact disk port;
detecting whether an operation mode switching request exists (S102); and
if it is detected that the operation mode switching request exists, sending an operation mode switching command by using the mapped port according to the operation mode switching request (S103), wherein the operation mode switching command is used to instruct the data card to switch the operation mode.

2. The method for controlling the switching between a PnP operation mode and a non-PnP operation mode of a data card according to claim 1, further comprising:
receiving an operation mode switching result returned by the data card (S104); and
when the operation mode switching result indicates failure, resending an operation mode switching command by using the mapped port; and when the operation mode switching result indicates success, sending a data card restarting command (S 105).

3. The method for controlling the switching between a PnP operation mode and a non-PnP operation mode of a data card according to claim 2, wherein when the operation mode switching result indicates failure, before the resending the operation mode switching command by using the mapped port, the method further comprises:
determining that the number of times the operation mode switching result returned by the data card is failure is smaller than a preset value.

4. The method for controlling the switching between a PnP operation mode and a non-PnP operation mode of a data card according to claim 1, wherein the port information is a name and route of a port mapped by the data card.

5. A method for switching between a PnP operation mode and a non-PnP operation mode of a data card, comprising:
receiving an operation mode switching command (S301), wherein the operation mode switching command is used to instruct the data card to switch the operation mode, and wherein, in the PnP operation mode, there is a port of the data card being mapped to a compact disk port, and in the non-PnP operation mode, there is no port of the data card being mapped to a compact disk port;
parsing the operation mode switching command (S302); and
according to a parsing result of the operation mode switching command, changing a product identification (PID) mode of the data card to a mode corresponding to the operation mode switching command (S303).

6. The method for switching between a PnP operation mode and a non-PnP operation mode of a data card according to claim 5, wherein
when the operation mode switching command is used to switch from a plug and play (PnP) operation mode to a non-PnP mode, the changing the PID mode of the data card to a mode corresponding to the operation mode switching command comprises:
changing the PID mode of the data card to a PID mode corresponding to the non-PnP mode; and
when the operation mode switching command is used to switch from a non-PnP operation mode to a PnP mode, the changing the PID mode of the data card to a mode corresponding to the operation mode switching command comprises:
changing the PID mode of the data card to a PID mode corresponding to the PnP mode.

7. The method for switching between a PnP operation mode and a non-PnP operation mode of a data card according to claim 5, wherein the receiving the operation mode switching command comprises:
receiving a command; and
determining whether the received command is an operation mode switching command.

8. The method for switching between a PnP operation mode and a non-PnP operation mode of a data card according to claim 5, wherein after the changing the PID mode of the data card to the mode corresponding to the operation mode switching command, the method further comprises:
sending an operation mode switching result to a sender of the operation mode switching command;
when the operation mode switching result indicates success, receiving a data card restarting command sent by the sender of the operation mode switching command; and
restarting the data card according to the data card restarting command, and sending port information of a mapped port after operation mode switching to the sender of the operation mode switching command.

9. A device for controlling the switching between a PnP operation mode and a non-PnP operation mode of a data card, comprising:
an information acquiring unit (401), configured to acquire port information of mapped ports of a data card, wherein the mapped ports are ports mapped into multiple virtual serial ports, and wherein, in the PnP operation mode, there is a port mapped to a compact disk port, and in the non-PnP operation mode, there is no port mapped to a compact disk port;
a detecting unit (402), configured to detect whether an operation mode switching request exists; and
a command sending unit (403), configured to send an operation mode switching command by using the mapped port according to the operation mode switching request if the detecting unit (402) detects that the operation mode switching request exists, wherein the operation mode switching command is used to instruct the data card to switch the operation mode.

10. The device for controlling the switching between a PnP operation mode and a non-PnP operation mode of a data card according to claim 9, further comprising:
a receiving unit (404), configured to receive an operation mode switching result returned by the data card, wherein
the command sending unit (403) is further configured to resend an operation mode switching command by using the mapped port when the operation mode switching result indicates failure, and send a data card restarting command when the operation mode switching result indicates success.

11. The device for controlling the switching between a PnP operation mode and a non-PnP operation mode of a data card according to claim 10, further comprising:
a counting unit (405), configured to count the number of times the operation mode switching result returned by the data card and received by the receiving unit (404) is failure, wherein
the command sending unit (403) is configured to send an operation mode switching command by using the mapped port according to the operation mode switching request; resend an operation mode switching command by using the mapped port, when the operation mode switching result indicates failure and the count value of the counting unit does not exceed a preset value; and send a data card restarting command when the operation mode switching result indicates success.

12. A data card, comprising:
a command receiving unit (601), configured to receive an operation mode switching command, wherein the operation mode switching command is used to instruct the data card to switch the operation mode, and wherein, in the PnP operation mode, there is a port of the data card being mapped to a compact disk port, and in the non-PnP operation mode, there is no port of the data card being mapped to a compact disk port;
a command parsing unit (602), configured to parse the operation mode switching command; and
a switching unit (603), configured to change a product identification (PID) mode of the data card to a mode corresponding to the operation mode switching command according to a parsing result of the operation mode switching command.

13. The data card according to claim 12, wherein
the switching unit (603) is configured to change the PID mode of the data card to a PID mode corresponding to a non-plug and play (PnP) mode, when the operation mode switching command is used to switch from a PnP operation mode to the non-PnP mode; and change the PID mode of the data card to a PID mode corresponding to the PnP mode when the operation mode switching command is used to switch from the non-PnP operation mode to the PnP mode.

14. The data card according to claim 12, wherein the command receiving unit (601) comprises:
a receiving module (6011), configured to receive a command; and
a command type determining module (6012), configured to determine whether the command received by the receiving unit is an operation mode switching command.

15. The data card according to claim 12, further comprising:
a sending unit (604), configured to send an operation mode switching result to a sender of the operation mode switching command;
wherein the command receiving unit (601) is further configured to receive a data card restarting command sent by the sender of the operation mode switching command when an operation mode switching result indicates success;
the data card further comprises a restarting unit (605), configured to restart the data card according to the data card restarting command; and
the sending unit (604) is further configured to send port information of a mapped port after operation mode switching to the sender of the operation mode switching command.

## Patentansprüche

1. Verfahren zum Steuern des Wechselns zwischen einer PnP-Betriebsart und einer Nicht-PnP-Betriebsart einer Datenkarte, umfassend:
Beschaffen von Portinformationen abgebildeter Ports einer Datenkarte (S101), wobei die abgebildeten Ports auf mehrere virtuelle serielle Ports abgebildete Ports sind und
wobei in der PnP-Betriebsart ein Port auf einen Compact-Disc-Port abgebildet wird und in der Nicht-PnP-Betriebsart kein Port auf einen Compact-Disc-Port abgebildet wird;
Detektieren, ob eine Betriebsart-Wechselanforderung existiert (S102); und
wenn detektiert wird, dass die Betriebsart-Wechselanforderung existiert, Senden eines Betriebsart-Wechselbefehls durch Verwendung des abgebildeten Ports gemäß der Betriebsart-Wechselanfordernng (S103), wobei der Betriebsart-Wechselbefehl verwendet wird, um die Datenkarte anzuweisen, die Betriebsart zu wechseln.

2. Verfahren zum Steuern des Wechselns zwischen einer PnP-Betriebsart und einer Nicht-PnP-Betriebsart einer Datenkarte nach Anspruch 1, ferner umfassend:
Empfangen eines von der Datenkarte zurückgegebenen Betriebsart-Wechselergebnisses (S104); und
wenn das Betriebsart-Wechselergebnis Fehlschlag angibt, Neusenden eines Betriebsart-Wechselbefehls durch Verwendung des abgebildeten Ports; und wenn das Betriebsart-Wechselergebnis Erfolg angibt, Senden eines Datenkarten-Neustartbefehls (S105).

3. Verfahren zum Steuern des Wechselns zwischen einer PnP-Betriebsart und einer Nicht-PnP-Betriebsart einer Datenkarte nach Anspruch 2, wobei, wenn das Betriebsart-Wechselergebnis Fehlschlag angibt, das Verfahren vor dem Neusenden des Betriebsart-Wechselbefehls durch Verwendung des abgebildeten Ports ferner Folgendes umfasst:
Bestimmen, dass die Anzahl von Malen, die das von der Datenkarte zurückgegebene Betriebsart-Wechselergebnis Fehlschlag ist, kleiner als ein voreingestellter Wert ist.

4. Verfahren zum Steuern des Wechselns zwischen einer PnP-Betriebsart und einer Nicht-PnP-Betricbsart einer Datenkarte nach Anspruch 1, wobei die Portinformationen ein Name und eine Route eines durch die Datenkarte abgebildeten Ports sind.

5. Verfahren zum Wechseln zwischen einer PnP-Betriebsart und einer Nicht-PnP-Betriebsart einer Datenkarte, umfassend:
Empfangen eines Betriebsart-Wechselbefehls (S301), wobei der Betriebsart-Wechselbefehl verwendet wird, um die Datenkarte anzuweisen, die Betriebsart zu wechseln, und wobei in der PnP-Betriebsart ein Port der Datenkarte auf einen Compact-Disc-Port abgebildet wird und in der Nicht-PnP-Betriebsart kein Port der Datenkarte auf einen Compact-Disc-Port abgebildet wird;
Analysieren des Betriebsart-Wechselbefehls (S302); und
Umändern eines Modus der Produktidentifikation (PID) der Datenkarte in einen Modus, der dem Betriebsart-Wechselbefehl entspricht, gemäß einem Analyseergebnis des Betriebsart-Wechselbefehls (S303).

6. Verfahren zum Wechseln zwischen einer PnP-Betriebsart und einer Nicht-PnP-Betriebsart einer Datenkarte nach Anspruch 5, wobei wenn der Betriebsart-Wechselbefehl verwendet wird, um von einer Plug-and-Play- bzw. PnP-Betriebsart zu einem Nicht-PnP-Modus zu wechseln, das Umändern des PID-Modus der Datenkarte in einen Modus, der dem Betriebsart-Wechselbefehl entspricht, Folgendes umfasst:
Umändern des PID-Modus der Datenkarte in einen PID-Modus, der dem Nicht-PnP-Modus entspricht; und
wenn der Betriebsart-WechselbeFehl verwendet wird, um von einer Nicht-PnP-Betriebsart zu einem PnP-Modus zu wechseln, das Umändern des PID-Modus der Datenkarte in einen Modus, der dem Betriebsart-Wechselbefehl entspricht,
Folgendes umfasst:
Umändern des PID-Modus der Datenkarte in einen PID-Modus, der dem PnP-Modus entspricht.

7. Verfahren zum Wechseln zwischen einer PnP-Betriebsart und einer Nicht-PnP-Betriebsart einer Datenkarte nach Anspruch 5, wobei das Empfangen des Betriebsart-Wechselbefehls Folgendes umfasst:
Empfangen eines Befehls; und
Bestimmen, ob der empfangene Befehl ein Betriebsart-Wechselbefehl ist.

8. Verfahren zum Wechseln zwischen einer PnP-Betriebsart und einer Nicht-PnP-Betriebsart einer Datenkarte nach Anspruch 5, wobei das Verfahren nach dem Umändern des PID-Modus der Datenkarte in den Modus, der dem Betriebsart-Wechselbefehl entspricht, ferner Folgendes umfasst:
Senden eines Betriebsart-Wechselergebnisses zu einem Absender des Betriebsart-Wechselbefehls;
wenn das Betriebsart-Wechsclergebnis Erfolg angibt, Empfangen eines durch den Absender des Betriebsart-Wechselbefehls gesendeten Datenkarten-Neustartbefehls;
und
Neustarten der Datenkarte gemäß dem Datenkarten-Neustartbefehl und Senden von Portinformationen eines abgebildeten Ports nach Betriebsartwechsel zu dem Absender des Betriebsart-Wechselbefehls.

9. Einrichtung zum Steuern des Wechselns zwischen einer PnP-Betriebsart und einer Nicht-PnP-Betriebsart einer Datenkarte, umfassend:
eine Informationsbeschaffungseinheit (401), die dafür ausgelegt ist,
Portinformationen von abgebildeten Ports einer Datenkarte zu beschaffen, wobei die abgebildeten Ports auf mehrere virtuelle serielle Ports abgebildete Ports sind und
wobei in der PnP-Betriebsart ein Port auf einen Compact-Disc-Port abgebildet wird und in der Nicht-PnP-Betriebsart kein Port auf einen Compact-Disc-Port abgebildet wird;
eine Detektionseinheit (402), die dafür ausgelegt ist, zu detektieren, ob eine Betriebsart-Wechselanforderung existiert; und
eine Befehlssendeeinheit (403), die dafür ausgelegt ist, einen Betriebsart-Wechselbefehl durch Verwendung des abgebildeten Ports gemäß der Betriebsart-Wechselanforderung zu senden, wenn die Detektionseinheit (402) detektiert, dass die Betriebsart-Wechselanforderung existiert, wobei der Betriebsart-Wechsetbefehl verwendet wird, um die Datenkarte anzuweisen, die Betriebsart zu wechseln.

10. Einrichtung zum Steuern des Wechselns zwischen einer PnP-Betriebsart und einer Nicht-PnP-Betriebsart einer Datenkarte nach Anspruch 9, ferner umfassend:
eine Empfangseinheit (404), die dafür ausgelegt ist, ein von der Datenkarte zurückgegebenes Betriebsart-Wechselergebnis zu empfangen, wobei die Befehlssendeeinheit (403) ferner dafür ausgelegt ist, einen Betriebsart-Wechselbefehl durch Verwendung des abgebildeten Ports neu zu senden, wenn das Betriebsart-Wechselergebnis Fehlschlag angibt, und einen Datenkarten-Neustartbefehl zu senden, wenn das Betriebsart-Wechselergebnis Erfolg angibt.

11. Einrichtung zum Steuern des Wechselns zwischen einer PnP-Betriebsart und einer Nicht-PnP-Betriebsart einer Datenkarte nach Anspruch 10, ferner umfassend:
eine Zähleinheit (405), die dafür ausgelegt ist, die Anzahl von Malen zu zählen, die das von der Datenkarte zurückgegebene und von der Empfangseinheit (404) empfangene Betriebsart-Wechselergebnis Fehlschlag ist, wobei die Befehlssendeeinheit (403) dafür ausgelegt ist, einen Betriebsart-Wechselbefehl durch Verwendung des abgebildeten Ports gemäß der Betriebsart-Wechselanforderung zu senden; einen Betriebsart-Wechselbefehl durch Verwendung des abgebildeten Ports neu zu senden, wenn das Betriebsart-Wechselergebnis Fehlschlag angibt und der Zählwert der Zähleinheit einen voreingestellten Wert nicht übersteigt; und einen Datenkarten-Neustartbefehl zu senden, wenn das Betriebsart-Wechselergebnis Erfolg augibt.

12. Datenkarte, umfassend:
eine Befehlsempfangseinheit (601), die dafür ausgelegt ist, einen Betriebsart-Wechselbefehl zu empfangen, wobei der Betriebsart-Wechselbefehl verwendet wird,
um die Datenkarte anzuweisen, die Betriebsart zu wechseln, und wobei in der PnP-Betriebsart ein Port einer Datenkarte auf einen Compact-Disc-Port abgebildet wird und in der Nicht-PnP-Betriebsart kein Port der Datenkarze auf einen Compact-Disc-Port abgebildet wird;
eine Befehlsanalyseeinheit (602), die dafür ausgelegt ist, den Betriebsart-Wechselbefehl zu analysieren; und
eine Wechseleinheit (603), die dafür ausgelegt ist, einen Modus der Produktidentifikation (PID) der Datenkarte gemäß einem Analyseergebnis des Betriebsart-Wechselbefehls in einen Modus umzuändern, der dem Betriebsart-Wechselbefehl entspricht.

13. Datenkarte nach Anspruch 12, wobei
die Wechseleinheit (603) dafür ausgelegt ist, den PID-Modus der Datenkarte in einen PID-Modus umzuändern, der einem Nicht-Plug-and-Play-Modus bzw. Nicht-PnP-Modus entspricht, wenn der Betriebsart-Wechselbefehl verwendet wird, um von einer PnP-Betriebsart zu dem Nicht-PnP-Modus zu wechseln; und den PID-Modus der Datenkarte in einen PID-Modus umzuändern, der dem PnP-Modus entspricht, wenn der Betriebsart-Wechselbefehl verwendet wird, um von der Nicht-PnP-Betriebsart zu dem PnP-Modus zu wechseln.

14. Datenkarte nach Anspruch 12, wobei die Befehlsempfangseinheit (601) Folgendes umfasst:
ein Empfangsmodul (6011), das dafür ausgelegt ist, einen Befehl zu empfangen; und
ein Befehlstyp-Bestimmungsmodul (6012), das dafür ausgelegt ist, zu bestimmen, ob der durch die Empfangseinheit empfangene Befehl ein Betriebsart-Wechselbefehl ist.

15. Datenkarte nach Anspruch 12, ferner umfassend:
eine Sendeeinheit (604), die dafür ausgelegt ist, ein Betriebsart-Wechselergebnis zu einem Absender des Betriebsart-Wechselhefehls zu senden;
wobei die Befehlsempfangseinheit (601) ferner dafür ausgelegt ist, einen durch den Absender des Betriebsart-Wechselbefehls gesendeten Datenkarten-Neustartbefehl zu empfangen, wenn ein Betriebsart-Wechselergebnis Erfolg angibt;
die Datenkarte ferner eine Neustarteinheit (605) umfasst, die dafür ausgelegt ist, die Datenkarte gemäß dem Datenkarten-Neustartbefehl neuzustarten; und
die Sendeeinheit (604) ferner dafür ausgelegt ist, nach Betriebsartwechsel Portinformationen eines abgebildeten Ports zu dem Absender des Betriebsart-Wechselbefehls zu senden.

## Revendications

1. Procédé de commande de la commutation entre un mode de fonctionnement PnP et un mode de fonctionnement non PnP d'une carte de données, le procédé comprenant les étapes consistant à :
acquérir des informations de ports relatives à des ports transposés d'une carte de données (S101), les ports transposés étant des ports transposés sur plusieurs ports série virtuels, et, dans le mode de fonctionnement PnP, un port étant transposé sur un port de disque compact et, dans le mode de fonctionnement non PnP, aucun port n'étant transposé sur un port de disque compact ;
détecter l'existence éventuelle d'une demande de commutation de mode de fonctionnement (S102) ; et
en cas de détection de l'existence de la demande de commutation de mode de fonctionnement, envoyer une commande de commutation de mode de fonctionnement en utilisant le port transposé conformément à la demande de commutation de mode de fonctionnement (S103), la commande de commutation de mode de fonctionnement étant utilisée pour donner à la carte de données l'ordre de commuter le mode de fonctionnement.

2. Procédé de commande de la commutation entre un mode de fonctionnement PnP et un mode de fonctionnement non PnP d'une carte de données selon la revendication 1, comprenant en outre les étapes consistant à :
recevoir un résultat de commutation de mode de fonctionnement renvoyé par la carte de données (S104) ; et
si le résultat de commutation de mode de fonctionnement indique un échec, renvoyer une commande de commutation de mode de fonctionnement en utilisant le port transposé ; et, si le résultat de commutation de mode de fonctionnement indique un succès, envoyer une commande de redémarrage de carte de données (S105).

3. Procédé de commande de la commutation entre un mode de fonctionnement PnP et un mode de fonctionnement non PnP d'une carte de données selon la revendication 2, le procédé comprenant en outre, si le résultat de commutation de mode de fonctionnement indique un échec, et préalablement à l'étape consistant à renvoyer la commande de commutation de mode de fonctionnement en utilisant le port transposé, l'étape consistant à :
établir que le nombre de fois où le résultat de commutation de mode de fonctionnement renvoyé par la carte de données est un échec est inférieur à une valeur prédéfinie.

4. Procédé de commande de la commutation entre un mode de fonctionnement PnP et un mode de fonctionnement non PnP d'une carte de données selon la revendication 1. les informations de ports constituant un nom et un routage d'un port transposé par la carte de données.

5. Procédé de commutation entre un mode de fonctionnement PnP et un mode de fonctionnement non PnP d'une carte de données, le procédé comprenant les étapes consistant à :
recevoir une commande de commutation de mode de fonctionnement (S301), la commande de commutation de mode de fonctionnement étant utilisée pour donner à la carte de données l'ordre de commuter le mode de fonctionnement, et, dans le mode de fonctionnement PnP, un port de la carte de données étant transposé sur un port de disque compact et, dans le mode de fonctionnement non PnP, aucun port de la carte de données n'étant transposé sur un port de disque compact ;
procéder au parsage de la commande de commutation de mode de fonctionnement (S302); et
en fonction d'un résultat de parsage de la commande de commutation de mode de fonctionnement, changer un mode d'identification de produit (PID) de la carte de données en un mode correspondant à la commande de commutation de mode de fonctionnement (S303).

6. Procédé de commutation entre un mode de fonctionnement PnP et un mode de fonctionnement non PnP d'une carte de données selon la revendication 5,
si la commande de commutation de mode de fonctionnement est utilisée pour commuter d'un mode de fonctionnement Plug and Play (PnP) sur un mode de non PnP, l'étape consistant à changer le mode PID de la carte de données en un mode correspondant à la commande de commutation de mode de fonctionnement comprenant l'étape consistant à :
changer le mode PID de la carte de données en un mode PID correspondant au mode non PnP ; et
si la commande de commutation de mode de fonctionnement est utilisée pour commuter d'un mode de fonctionnement non PnP sur un mode PnP, l'étape consistant à changer le mode PID de la carte de données en un mode correspondant à la commande de commutation de mode de fonctionnement comprenant l'étape consistant à :
changer le mode PID de la carte de données en un mode PID correspondant au mode PnP.

7. Procédé de commutation entre un mode de fonctionnement PnP et un mode de fonctionnement non PnP d'une carte de données selon la revendication 5, l'étape consistant à recevoir la commande de commutation de mode de fonctionnement comprenant les étapes consistant à :
recevoir une commande ; et
établir si la commande reçue est une commande de commutation de mode de fonctionnement.

8. Procédé de commutation entre un mode de fonctionnement PnP et un mode de fonctionnement non PnP d'une carte de données selon la revendication 5, le procédé comprenant en outre, suite à l'étape consistant à changer le mode PID de la carte de données en le mode correspondant à la commande de commutation de mode de fonctionnement, les étapes consistant à :
envoyer un résultat de commutation de mode de fonctionnement à un émetteur de la commande de commutation de mode de fonctionnement ;
si le résultat de commutation de mode de fonctionnement indique un succès, recevoir une commande de redémarrage de carte de données envoyée par l'émetteur de la commande de commutation de mode de fonctionnement ; et
redémarrer la carte de données en fonction de la commande de redémarrage de carte de données, et envoyer à l'émetteur de la commande de commutation de mode de fonctionnement des informations de ports relatives à un port transposé suite à la commutation de mode de fonctionnement.

9. Dispositif de commande de la commutation entre un mode de fonctionnement PnP et un mode de fonctionnement non PnP d'une carte de données, le dispositif comprenant :
une unité d'acquisition d'informations (401), conçue pour acquérir des informations de ports relatives à des ports transposés d'une carte de données, les ports transposés étant des ports transposés sur plusieurs ports série virtuels, et, dans le mode de fonctionnement PnP, un port étant transposé sur un port de disque compact et, dans le mode de fonctionnement non PnP, aucun port n'étant transposé sur un port de disque compact ;
une unité de détection (402), conçue pour détecter l'existence éventuelle d'une demande de commutation de mode de fonctionnement ; et
une unité d'envoi de commande (403), conçue pour envoyer une commande de commutation de mode de fonctionnement en utilisant le port transposé conformément à la demande de commutation de mode de fonctionnement si l'unité de détection (402) détecte l'existence de la demande de commutation de mode de fonctionnement, la commande de commutation de mode de fonctionnement étant utilisée pour donner à la carte de données l'ordre de commuter le mode de fonctionnement.

10. Dispositif de commande de la commutation entre un mode de fonctionnement PnP et un mode de fonctionnement non PnP d'une carte de données selon la revendication 9, comprenant en outre :
une unité de réception (404), conçue pour recevoir un résultat de commutation de mode de fonctionnement renvoyé par la carte de données,
l'unité d'envoi de commande (403) étant en outre conçue pour renvoyer une commande de commutation de mode de fonctionnement en utilisant le port transposé si le résultat de commutation de mode de fonctionnement indique un échec, et
envoyer une commande de redémarrage de carte de données si le résultat de commutation de mode de fonctionnement indique un succès.

11. Dispositif de commande de la commutation entre un mode de fonctionnement PnP et un mode de fonctionnement non PnP d'une carte de données selon la revendication 10, comprenant en outre :
une unité de comptabilisation (405), conçue pour comptabiliser le nombre de fois où le résultat de commutation de mode de fonctionnement renvoyé par la carte de données et reçu par l'unité de réception (404) est un échec,
l'unité d'envoi de commande (403) étant conçue pour envoyer une commande de commutation de mode de fonctionnement en utilisant le port transposé conformément à la demande de commutation de mode de fonctionnement ; renvoyer une commande de commutation de mode de fonctionnement en utilisant le port transposé si le résultat de commutation de mode de fonctionnement indique un échec et la valeur de comptabilisation de l'unité de comptabilisation ne dépasse pas une valeur prédéfinie ;
et envoyer une commande de redémarrage de carte de données si le résultat de commutation de mode de fonctionnement indique un succès.

12. Carte de données, comprenant :
une unité de réception de commande (601), conçue pour recevoir une commande de commutation de mode de fonctionnement, la commande de commutation de mode de fonctionnement étant utilisée pour donner à la carte de données l'ordre de commuter le mode de fonctionnement, et, dans le mode de fonctionnement PnP, un port de la carte de données étant transposé sur un port de disque compact et, dans le mode de fonctionnement non PnP, aucun port de la carte de données n'étant transposé sur un port de disque compact ;
une unité de parsage de commande (602), conçue pour procéder au parsage de la commande de commutation de mode de fonctionnement ; et
une unité de commutation (603), conçue pour changer un mode d'identification de produit (PID) de la carte de données en un mode correspondant à la commande de commutation de mode de fonctionnement en fonction d'un résultat de parsage de la commande de commutation de mode de fonctionnement.

13. Carte de données selon la revendication 12,
l'unité de commutation (603) étant conçue pour changer le mode PID de la carte de données en un mode PID correspondant à un mode non Plug and Play (PnP) si la commande de commutation de mode de fonctionnement est utilisée pour commuter d'un mode de fonctionnement PnP sur le mode non PnP ; et changer le mode PID de la carte de données en un mode PID correspondant au mode PnP si la commande de commutation de mode de fonctionnement est utilisée pour commuter du mode de fonctionnement non PnP sur le mode PnP.

14. Carte de données selon la revendication 12, l'unité de réception de commande (601) comprenant :
un module de réception (6011), conçu pour recevoir une commande ; et
un module d'établissement de type de commande (6012), conçu pour établir si la commande reçue par l'unité de réception est une commande de commutation de mode de fonctionnement.

15. Carte de données selon la revendication 12, comprenant en outre :
une unité d'envoi (604), conçue pour envoyer un résultat de commutation de mode de fonctionnement à un émetteur de la commande de commutation de mode de fonctionnement ; et
l'unité de réception de commande (601) étant en outre conçue pour recevoir une commande de redémarrage de carte de données envoyée par l'émetteur de la commande de commutation de mode de fonctionnement si un résultat de commutation de mode de fonctionnement indique un succès ;
la carte de données comprenant en outre une unité de redémarrage (605), conçue pour redémarrer la carte de données en fonction de la commande de redémarrage de carte de données ; et
l'unité d'envoi (604) étant en outre conçue pour envoyer à l'émetteur de la commande de commutation de mode de fonctionnement des informations de port relatives à un port transposé suite à la commutation de mode de fonctionnement.
